# FASCICULE DE BREVET EUROPEEN

(11) **EP 0 658 278 B1**
(45) Date de publication et mention de la délivrance du brevet: **18.12.1996**
(21) Numéro de dépôt: 93919409.8
(22) Date de dépôt: 02.09.1993
(51) Int. Cl.: H01M 10/40, H01M 10/26, H01M 8/10, H01M 4/62

(54) **ELECTROLYTE POLYMERE SOLIDE ALCALIN, ELECTRODE ET GENERATEUR ELECTROCHIMIQUE COMPORTANT UN TEL ELECTROLYTE**
FESTER ALKALISCHER POLYMERELEKTROLYT, ELEKTRODE UND ELEKTROCHEMISCHER GENERATOR, DIE DIESEN ELEKTROLYT ENTHALTEN
ALKALINE SOLID POLYMER ELECTROLYTE, ELECTRODE AND ELECTROCHEMICAL GENERATOR CONTAINING SAID ELECTROLYTE

(30) Priorité: 02.09.1992 FR 9210471
(43) Date de publication de la demande: 21.06.1995
(73) Titulaire: CONSERVATOIRE NATIONAL DES ARTS ET METIERS, F-75003 Paris (FR); ELECTRICITE DE FRANCE, F-75008 Paris (FR)
(72) Inventeur: FAUVARQUE, Jean-François, F-75006 Paris (FR)
(74) Mandataire: Warcoin, Jacques
(86) Numéro de dépôt international: FR9300838
(87) Numéro de publication internationale: WO9406166

(56) Documents cités:
- EP-A- 0 437 309
- Database WPIL, AN=81-524290, Derwent Publications Ltd, Londres, GB), & JP,A, 56063772

## Description

La présente invention concerne un électrolyte solide polymère alcalin, les électrodes comportant un tel électrolyte et leurs applications, notamment les générateurs électrochimiques.

Le terme électrolyte solide polymère alcalin désigne un matériau possédant des caractéristiques propres aux matériaux à base de polymères organiques, et des caractéristiques de conduction du courant électrique par déplacement d'ions, en particulier des ions hydroxyles OH.

Un tel matériau peut être utilisé pour la réalisation de dispositifs électrochimiques : électrodes, capteurs, dispositifs électrochromes, générateurs, etc...

La présente invention concerne plus particulièrement des générateurs dits rechargeables ou secondaires et présente un intérêt particulier dans le cas des générateurs comportant une électrode négative dite soluble, notamment celle de zinc.

Il est connu que les accumulateurs du commerce fonctionnent avec un élecrolyte liquide : soit une solution acide aqueuse dont les plus répandus sont les accumulateurs au plomb, soit une solution alcaline aqueuse dont les plus répandus sont ceux à électrode négative de zinc ou de cadmium, soit une solution d'un sel, organique ou non, dans un solvant organique, dont les plus répandus sont ceux à électrode négative de lithium.

L'électrolyte est maintenu en quantité suffisante pour des échanges ioniques entre les électrodes, par capillarité dans des séparateurs poreux. Ces séparateurs se présentent sous différentes formes, telles que les fibres tissées, feutrées, constituées de différents matériaux, tels que le verre, les polymères cellulosiques, vinyliques, polyoléfines, polyamides par exemple.

Néanmoins, tous ces séparateurs ne sont toujours pas satisfaisants, à cause de leur caractère perméable :
- soit aux ions zincates formés en décharge, ce qui conduit à la formation à la recharge des dendrites bien connues,
- soit à l'oxygène provenant de l'électrode positive en recharge, ce qui gêne la charge complète de l'électrode négative, en particulier lorsqu'elle est en cadmium.

On a proposé pour remédier à ces inconvénients de remplacer ces séparateurs poreux par des feuilles de polymères tel que le carboxyméthylcellulose, la cellulose carboxylique, la cellulose régénérée, l'alcool polyvinylique, sans que cette mise en oeuvre donne complète satisfaction.

Ces inconvénients sont particulièrement notables dans le cas des accumulateurs nickel-zinc. En effet, ce type d'accumulateur présente un grave défaut de cyclabilité en potasse aqueuse du fait que le zincate de potassium, soluble, stratifie lors de la décharge et le zinc se dépose à la recharge ailleurs qu'à l'endroit où il s'est dissous. Il en résulte une modification de la forme et du comportement de l'électrode de zinc. En outre, lors de la recharge, il se forme des dendrites de zinc qui provoquent rapidement des court-circuits, rendant inutilisable l'accumulateur. Bien que des membranes particulières et divers artifices aient été proposés pour rendre l'électrode de zinc cyclable, il se trouve que ces solutions ne donnent pas entièrement satisfaction et il en résulte que les accumulateurs nickel-zinc sont peu commercialisés.

Ces phénomènes parasites sont évidemment impossibles avec des Electrolytes Solides Polymères (ESP). Ces électrolytes solides polymères sont en outre connus pour permettre l'obtention de générateurs minces, faciles à préparer par des techniques de mise en oeuvre de film de polymère.

Au moyen d'électrolytes solides polymères salins ou acides, on espère obtenir des accumulateurs au lithium performants en capacité et en cyclage ou des piles à combustibles efficaces. Ces générateurs fonctionnent en général au-dessus de la température ambiante (de 60 à 200°C), car la conductivité de ces ESP est souvent mauvaise à 25°C et en-dessous. De plus, les acccumulateurs au lithium présentent des résistances de transfert supplémentaires, principalement à l'électrode positive, qui limitent encore plus la puissance en température ambiante et en-dessous.

Par ailleurs, en général, il est connu qu'en milieux aqueux les électrolytes alcalins présentent plusieurs avantages par rapport aux électrolytes acides (H₂SO₄) ou salins : notamment une variation faible de la composition de l'électrolyte lors du cyclage, une bonne conductivité à -40°C, permettant d'allier puissance et capacité.

Ainsi, un des objets de la présente invention est de proposer un électrolyte solide polymère alcalin permettant de surmonter les inconvénients discutés ci-dessus.

Un autre objet de la présente invention est de proposer un électrolyte solide polymère alcalin présentant une excellente conductivité ionique et d'autres qualités permettant d'obtenir des films très minces, notamment de quelques centièmes de millimètres, suffisamment rigides pour être auto-portants, tout en conservant leur propriété de conducteur ionique électroniquement résistant.

Un autre objet de la présente invention est de proposer des générateurs électrochimiques pourvus de tels électrolytes.

Selon la présente invention, l'électrolyte solide polymère alcalin, aqueux, comprend une matrice de polymère organique polaire, solide à température ambiante, et un composé ou un mélange de composés basiques choisis parmi les hydroxydes de métal alcalin ou alcalino-terreux ou d'ammonium, la teneur en eau étant comprise entre 0,1 et 50%.

La masse moléculaire moyenne en nombre du polymère utilisé doit être suffisante pour que le matériau possède, pas avantageux ordinaire, le comportement mécanique d'un solide. Il n'est pas avantageux qu'elle soit trop élevée, pour permettre le mélange aisé des constituants à l'état fondu. De plus, cet électrolyte sera avantageusement visco-élastique à température ambiante afin d'éviter des liaisons électriques parasites entre les deux pôles. Ces polymères ont avantageusement une masse moléculaire comprise entre 2000 et 5 000 000.

Ces polymères doivent être polaires et ne pas être sensibles à l'hydrolyse. Parmi ces polymères, il a été trouvé qu'il était avantageux d'utiliser des homopolymères de type polyéther ou des copolymères de différents polyéthers ou éthers, tels que ceux qui sont obtenus par ouverture des cycles oxiranne, tétrahydrofuranne, dioxolanne.

Bien entendu, des mélanges de polyéthers peuvent également être utilisés. Peuvent également être utilisés des polymères à séquences polyéther.

Parmi les polyéthers, on utilise avantageusement le polyoxyde d'éthylène (POE), présentant une masse moléculaire comprise entre 2000 et 5 000 000, de préférence comprise entre 20 000 et 200 000. Un polymère, commercialement disponible possède un point de fusion situé vers 60°C.

Le matériau réalisé conformément à l'invention contient un ou plusieurs hydroxydes basiques, solubles dans le polymère organique polaire, à une température supérieure à la température de fusion du matériau. Ces hydroxydes basiques sont des espèces ioniques solubles se dissociant dans le milieu en formant des ions OH⁻. Ils comportent en particulier les hydroxydes des métaux alcalins, choisis parmi la soude (NaOH), la potasse (KOH) notamment, les hydroxydes d'ammonium tels que les hydroxydes d'ammonium quaternaires et les hydroxydes des métaux alcalino-terreux choisis notamment parmi le dihydroxyde de baryum (Ba(OH)₂) ou le dihydroxyde de calcium (Ca(OH)₂). On utilisera avantageusement l'hydroxyde de potassium KOH, sous sa forme commerciale de pastilles, qui se dissout très bien dans le polyoxyéthylène fondu, propriété innattendue qui n'a pas fait l'objet d'indications dans la littérature scientifique et technique. Certains hydroxydes basiques comme l'hydroxyde de lithium, Li OH, ne constituent pas à eux seuls de bons hydroxydes basiques pour former un matériau bon conducteur ionique, car ils sont trop peu solubles, mais ils peuvent être utilisés comme additifs en vue d'applications particulières. Il en est de même de nombreux hydroxydes métalliques susceptibles de former, en présence d'ions OH⁻ en excès, des "ate complexes" particuliers, par exemple l'hydroxyde d'aluminium Al(OH)₃, l'hydroxyde de zinc Zn(OH)₂, etc...

Parmi les hydroxydes d'ammonium quaternaire convenant dans le cadre de la présente invention, on peut citer ceux qui répondent à la formule R₄N⁺OH⁻ dans laquelle le radical R est un radical hydrocarboné. Ce radical hydrocarboné peut être substitué de manière connue. On citera notamment l'hydroxyde de N-tétrabutylammonium ou de tétraéthylammonium ou de tétraméthylammonium.

Le composé ou mélange de composés basiques se trouve sous la forme d'une solution solidifiée. C'est-à-dire que le mélange : polymère, composé et eau est sous forme d'une solution à haute température, par exemple 60 à 150°C et sous forme solide à température ambiante.

L'électrolyte solide polymère contient en général de l'eau. La quantité d'eau est en général au moins égale à la quantité d'eau résiduelle présente dans les formes commercialement disponibles des hydroxydes basiques utilisés, pastilles de potasse ou de soude par exemple. Une quantité d'eau supplémentaire peut être avantageusement ajoutée au milieu.

L'addition d'eau a généralement pour effet d'abaisser la viscosité du milieu fondu et d'accélérer la dissolution de l'hydroxyde basique. Il est avantageux cependant que la quantité d'eau ajoutée ne soit pas trop élevée, de sorte que le matériau obtenu lors du refroidissement à température ordinaire soit effectivement un solide. L'eau ainsi ajoutée sert principalement, à la température ordinaire, à la solvatation des ions, notamment des anions OH-, et les rend apparemment plus mobiles.

Le matériau conforme à l'invention peut éventuellement contenir des additifs, comme des plastifiants, modifiant leurs propriétés mécaniques (souplesse accrue), des charges minérales inertes, des colorants, ou les produits des réactions électrochimiques des dispositifs utilisant ce matériau conforme à l'invention. La teneur en eau est normalement comprise entre 0,1 et 50 % en poids. Toutefois selon la nature et la masse moléculaire du polymère, notamment un polyéther, et la nature de la base, une démixtion peut se produire pour une teneur en eau trop forte. Il sera de ce fait, et également pour que l'électrolyte obtenu à température ambiante soit un solide, avantageux de ne pas dépasser une teneur en pourcentage en poids d'eau supérieure à 30 %. De façon générale, la conductivité de l'ESP augmente avec la teneur en eau.

Selon un mode préféré de réalisation, l'électrolyte comprend en pourcentage en poids :
- polymère 30 à 90 %, de préférence 50 à 80 %,
- composé basique 5 à 50 %, de préférence 10 à 30 %
- eau 5 à 25 %.

On a constaté avec surprise que la solution solidifiée de composé basique dans le polyéther conduisait à un mélange du type visco-élastique rigide, gardant sa forme sans s'écouler lorsqu'il est abandonné à lui-même. Ceci est particulièrement le cas quand on utilise de la potasse et un polyoxyde d'éthylène. Cette propriété est particulièrement avantageuse pour réaliser des générateurs électrochimiques tels qu'ils vont être décrits ci-après notamment sous forme de films minces.

Selon une caractéristique typique et inattendue de l'invention, l'électrolyte, liquide visqueux au dessus de sa température de fusion, forme, à la température ordinaire (25°C), un matériau parfaitement solide, par cristallisation au moins partielle, soit du polymère utilisé, soit d'une espèce ionique comportant le polymère dans sa structure cristalline.

Cependant un matériau solide obtenu avec un polymère amorphe n'est pas exclu du cadre de l'invention pour autant que le matériau puisse être considéré comme une dissolution d'eau et d'hydroxyde basique dans le polymère et non comme une solution de polymère et d'hydroxyde basique dans l'eau.

En particulier, sont exclus du cadre de l'invention les matériaux gélatineux obtenus par dissolution dans l'eau d'un hydroxyde basique et gélifiés par dissolution d'une petite quantité de polymères organiques appropriés, éventuellement réticulables (comme par exemple ceux décrits dans EP-A-4 37309), ou par formation d'un gel inorganique d'un hydroxyde métallique peu soluble (alumine, silice,...). De tels matériaux, connus et utilisés depuis très longtemps comme électrolyte dans les piles alcalines commerciales, ne peuvent pas être considérés comme des électrolytes solides polymères.

Le matériau, conforme à la présente invention, peut être conservé indéfiniment sous sa forme initiale à l'état solide, à la température ordinaire, il peut être rendu liquide ou pâteux au-dessus de sa température de fusion et mis en forme par les techniques habituelles de mise en forme des polymères cristallisables fondus : extrusion, moulage, etc... et solidifiés dans la forme désirée par refroidissement.

Après solidification, la forme du matériau peut encore être modifiée par chauffage, fusion du matériau, action mécanique appropriée et resolidification par refroidissement.

Cette opération peut être répétée aussi souvent qu'il est désiré.

Conformément aux propriétés classiques des matériaux polymères, le matériau conforme à l'invention, présente une température de transition vitreuse, Tv, dépendant de sa composition, et choisie de préférence inférieure à la température normale d'utilisation du matériau, et une température de fusion Tf, voisine de la température de fusion du polymère constitutif de base.

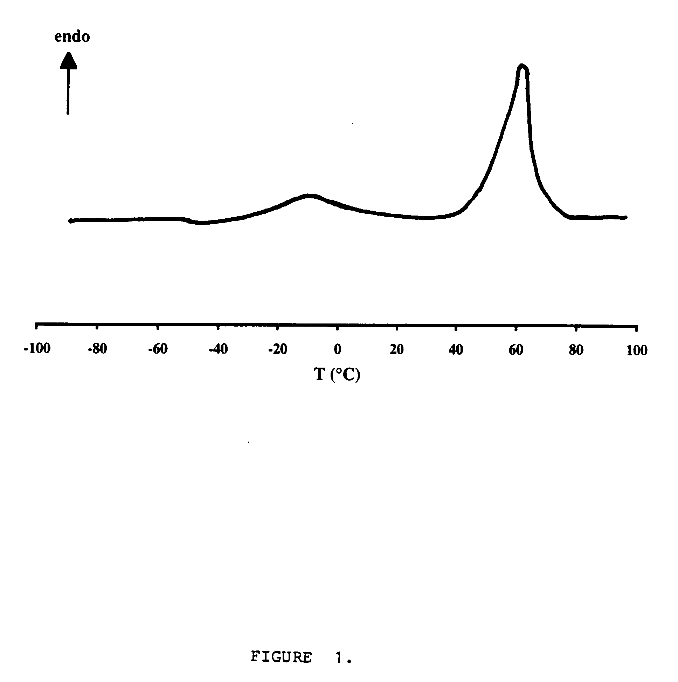

La figure 1 présente un thermogramme obtenu par DSC (Differential Scanning Calorimetry) d'un matériau typique conforme à l'invention avec une vitesse de chauffe de 10°/mn. On observe pour la composition choisie :
POE, Mn 20 000, 64 %
KOH, 16 %
H2O 20 %
Tv = vers - 10°C
Tf = vers 60°C
Tf, étant voisine de la température de fusion du POE
Tv, étant la température de transition vitreuse du matériau.

Comme tous les matériaux polymères partiellement cristallins, le matériau, conforme à l'invention, peut également être soumis à des déformations plastiques, irréversibles, mais limitées, aux températures supérieures à sa température de transition vitreuse Tv et inférieure à sa température de fusion Tf. De même que tout matériau solide, le matériau conforme à l'invention, peut également subir des déformations élastiques, dans la limite de son domaine d'élasticité.

Il a été trouvé de façon innattendue et très surprenante que le matériau conforme à l'invention possède une conductivité ionique très élevée à la température ordinaire, généralement bien supérieure à 10⁻³S.m⁻¹ et souvent supérieure à 10⁻¹S.m⁻¹. Ces valeurs sont surprenantes car les meilleurs électrolytes solides polymères anhydres, obtenus par dissolution d'un sel de lithium, LiClO₄ par exemple dans du POE, ont des conductivités au mieux égales à 10⁻³ S.m⁻¹ à 25°C.
(réf : N.B. ARMAND - Current State of PEO-Based Electrolyte in Polymer Electrolyte Reviews, tome 1. J.R.Mac.Callum et C.A. Vincent Elsevier Applied Science - Londres 1987).

De préférence, la conductivité ionique est comprise entre 0,01 et 1 S.m⁻¹, de préférence 0,01 et 0,3 S.m⁻¹ à 25°C.

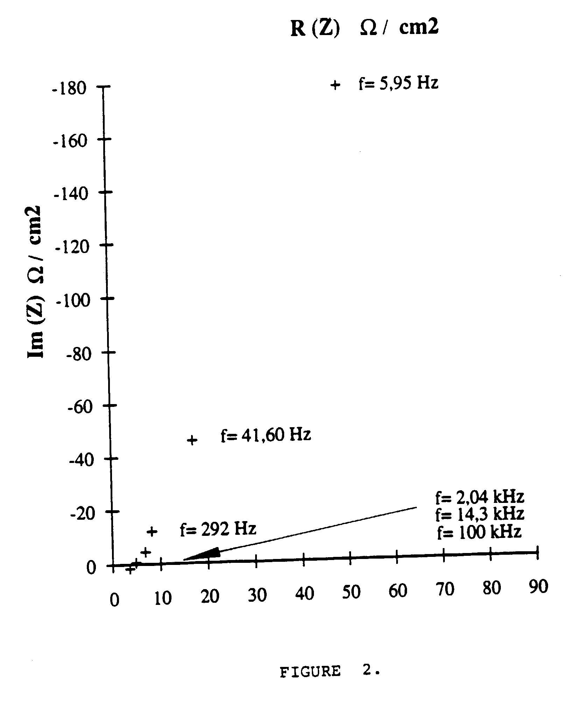

La figure 2 représente le diagramme d'impédance à 25°C d'une cellule de conductivité utilisant un matériau, conforme à l'invention. comme électrolyte, de composition : POE 64 %, KOH 20 %, H20 16 %.

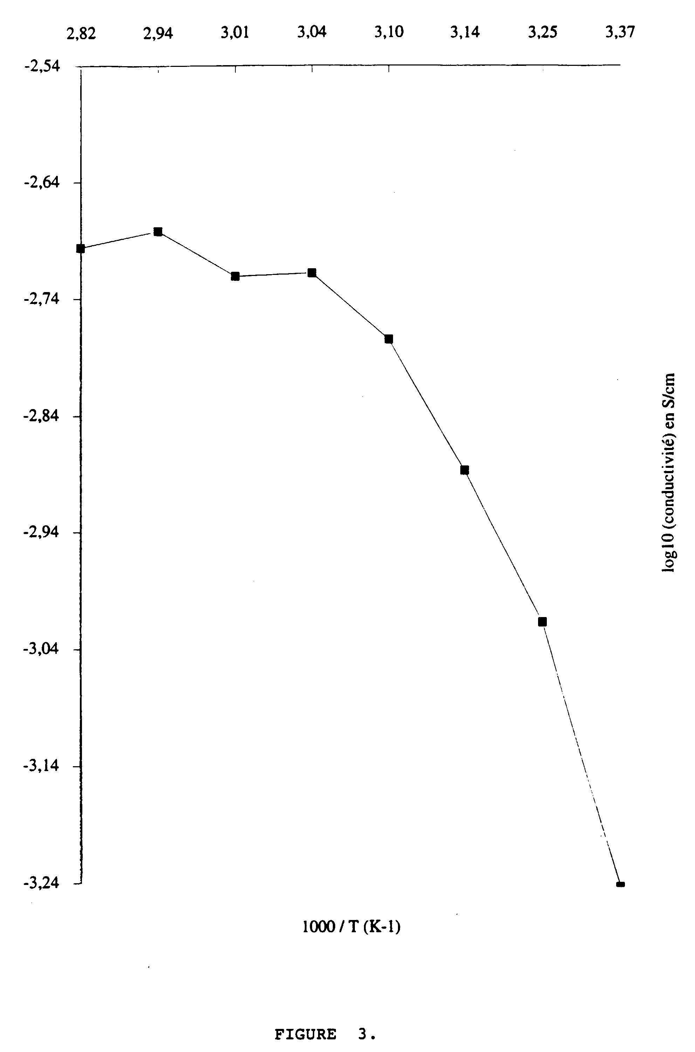

La figure 3 présente les variations de conductivité de ce matériau en fonction de la température : log (conductivité) = f (1000/T). Cette variation est typique de celles observées avec les électrolytes solides polymères.

L'invention concerne également un électrolyte solide polymère alcalin tel qu'il est susceptible d'être obtenu par dissolution de l'hydroxyde basique décrit ci-dessus dans le polymère à l'état fondu à une température appropriée, notamment selon les compositions indiquées ci-dessus de façon générale ou particulière.

Cette température sera avantageusement comprise entre 60 et 150°C selon la nature du polymère et sa masse moléculaire.

Dans le cas d'un polyéther de type polyoxyde d'éthylène, il a été trouvé de façon surprenante qu'un électrolyte solide polymère, bon conducteur ionique, pouvait être préparé par dissolution vers 70-110°C d'un hydroxyde basique tel que décrit précédemment, notamment la potasse dans un polymère fondu, notamment du polyoxyde d'éthylène.

La présente invention concerne également un procédé de préparation d'un électrolyte solide polymère alcalin tel que décrit ci-dessus, caractérisé en ce qu'on mélange un ou plusieurs polymères polaires à une température où il se trouve à l'état fondu de préférence entre 60 et 150°C avec un ou plusieurs composés basiques en présence d'eau et d'additifs appropriés et en ce que l'on refroidit le mélange et l'on récupère ledit électrolyte.

Selon un mode particulier de réalisation, sous atmosphère inerte, on ajoute au polymère fondu le (ou les) hydroxyde(s) basique(s) choisi(s), la quantité d'eau désirée, et, éventuellement les additifs souhaités. Le mélange est ensuite coulé dans des lingotières, refroidi, ou transformé en granulés et conservé comme tel. Le matériau est ensuite mis en oeuvre par les procédés adaptés, le plus souvent moulage du matériau fondu, mais peut aussi être transformé et mis en oeuvre par les techniques classiques de mise en oeuvre des polymères, y compris par dissolution dans un solvant volatil adapté (éthanol par exemple) suivie d'une évaporation du solvant.

L'invention a également pour objet des électrodes comportant une ou plusieurs matières électrochimiquement actives liées par un électrolyte selon l'invention. Il est ainsi possible de réaliser les masses actives positives ou négatives d'un générateur électrochimique.

Les matières actives de l'électrode négative ou de l'électrode positive peuvent être liées mécaniquement par cet électrolyte polymère. Cet électrolyte assure notamment la conductivité ionique de l'électrode poreuse.

Les matières actives sont celles bien connues pour constituer l'électrode négative et l'électrode positive d'un générateur électrochimique telles que celles qui sont décrites ci-après.

De préférence, les électrodes comportent en pourcentage en poids :
- matière active 20 à 80 %, de préférence 40 à 75 %,
- électrolyte 80 à 20 %, de préférence 60 à 25 %.

La présente invention a également pour objet la réalisation de dispositif électrochimiques utilisant l'ESP alcalin comme séparateur, conducteur ionique, électroniquement isolant, mais reliant, au sens adhésif du terme, les faces actives des électrodes positives et négatives.

La réalisation des dispositifs électrochimiques conformes à l'invention peut être facilitée en portant, si c'est possible, le dispositif à une température supérieure au point de fusion de l'ESP alcalin, de façon à obtenir un bon contact électrique entre les électrodes et l'ESP alcalin, puis en laissant refroidir lentement le dispositif sous compression, en ayant soin cependant d'éviter la formation de courts-circuits entre les deux électrodes, au moyen de cales d'épaisseur appropriée.

L'invention concerne également un générateur électrochimique muni d'une électrode négative et d'une électrode positive, éventuellement formées d'une matière active liée à l'électrolyte comme décrit précédemment, et reliées par un électrolyte selon la présente invention occupant l'espace inter-électrodes.

La présente invention concerne en particulier les dispositifs électrochimiques connus sous le nom de générateurs électrochimiques rechargeables, "accumulateurs" ou "piles à combustibles".

Un tel générateur comporte une électrode négative et une électrode positive, éventuellement formées, comme précédemment décrit, d'une matière active liée par l'ESP alcalin, et d'un séparateur comportant l'ESP alcalin conforme à l'invention.

Ce générateur est bien entendu relié, au moins au cours du fonctionnement, à des collecteurs servant d'issue au courant électrique.

Les générateurs électrochimiques particulièrement concernés par la présente invention sont ceux qui comportent une électrode négative de type zinc, cadmium, fer, aluminium, magnésium ou hydrures ou oxydes métalliques ou électrode à gaz comme l'électrode à hydrogène et une électrode positive de type hydroxyde ou oxyde de cuivre, argent, mercure, manganèse, vanadium, chrome, molybdène, nickel ; sulfure de fer, titane, molybdène, ou à gaz type air, oxygène.

Les électrodes peuvent également être formées de mélange de ces matières.

Le caractère visco-élastique rigide de l'électrolyte selon l'invention, permet d'éliminer le grave problème des fuites souvent rencontrées au cours de l'utilisation des générateurs électrochimiques tels que les piles. Ce caractère permet également de maintenir la cohésion en premier lieu des matières actives des électrodes, tout en assurant la conductivité ionique de l'électrode poreuse, en second lieu du séparateur, notamment lorsqu'il est sous forme de couche mince, sans artifice de texture inerte, tout en assurant la conduction ionique et l'isolement électronique, et en troisième lieu, des couches actives de part et d'autre de celles des séparateurs.

Ces électrolytes selon l'invention présentent en outre l'avantage d'être très peu perméables aux gaz tels que l'oxygène.

En outre, comme cela a déjà été indiqué précédemment, un autre avantage, découlant des caractéristiques physico-chimiques de l'électrolyte selon l'invention, est qu'il est possible d'obtenir des films très minces, notamment de quelques centièmes de millimètres et que ces films sont autoportants tout en conservant leur propriété de conducteur ionique électroniquement résistant. Ces films minces sont particulièrement adaptés aux générateurs dits "minces".

L'invention a également pour objet des générateurs minces comportant un électrolyte selon l'invention.

La présente invention concerne également un générateur électrochimique constitué de couches de matière active (constituant l'électrode négative et l'électrode positive), liées par l'électrolyte selon l'invention de manière à constituer un film mince notamment de quelques centièmes de millimètres adhérent et en liaison électronique avec un support conducteur, tel qu'un feuillard métallique par exemple.

L'invention concerne plus particulièrement une bi-électrode constituée d'un feuillard métallique associé sur chaque face à deux matières actives opposées liées par un électrolyte selon la présente invention.

Il est possible ainsi, de former des bi-électrodes très minces conduisant à des densités d'énergie et de puissance élevées sans crainte d'auto-décharge par courants de fuite.

De façon générale, un autre avantage de la présente invention est de permettre de prolonger la durée de vie des générateurs secondaires au cours des cycles charge/décharge. Cette propriété est particulièrement avantageuse dans le cas de générateurs à électrode négative de zinc.

L'invention concerne donc également un générateur électrochimique à électrode négative de zinc comportant un électrolyte selon la présente invention.

Par rapport aux techniques connues à ce jour, on constate que la durée de vie en cyclage est accrue de près de cinq fois et qu'il est par conséquent possible d'atteindre plusieurs centaines de cycles, valeur remarquable pour un générateur à électrodes de zinc.

Il a par ailleurs été constaté de façon très surprenante que l'hydroxyde de nickel pouvait être oxydé réversiblement au contact de l'électrolyte selon l'invention. En effet, contrairement à toute attente, l'oxyhydroxyde de nickel NiOOH est connu pour oxyder les groupes -CH₂OH en milieu basique, groupes qui constituent les terminaisons des chaînes de polyéther. Effectivement à chaud (T 80°C), à l'état fondu, le mélange tel que décrit dans le procédé de préparation, à savoir : le polyéther, le composé basique et l'eau réduit une électrode chargée de nickel plus rapidement qu'elle ne s'auto-décharge à cette température. A température ordinaire, l'électrode de nickel se recharge très bien.

L'invention concerne encore un accumulateur nickel-zinc dont l'électrode positive est constituée d'hydroxyde de nickel noyé dans un électrolyte selon l'invention et mise en forme de feuille, éventuellement connectée à un collecteur servant d'issue de courant, l'électrode négative est constituée de poudre de zinc-métal ou oxyde noyée dans l'électrolyte selon l'invention, les deux électrodes étant reliées par un électrolyte selon l'invention. De préférence, de la poudre de cadmium ou de cuivre amalgamé est ajoutée pour accroître la conductivité de l'électrode négative précédemment décrite.

Pour accroître la conductivité de l'électrode positive on ajoutera avantageusement de la poudre de nickel divisée.

L'invention concerne encore une pile à combustible dont l'électrolyte est conforme à l'invention.

Selon une variante particulière, la pile est du type O₂-air -H₂; ou O₂ (air) -NH₃.

D'autres piles peuvent être également réalisées.

Il est possible ainsi d'utiliser l'aluminium dans une pile AI-air ou Al-électrode de nickel, et Al-MnO₂, bien que l'aluminium soit attaqué à chaud avec formation d'hydrogène. Il est même possible de réaliser des générateurs Zn-air et Zn-MnO₂. Dans le cas d'une électrode positive à base de MnO₂, l'électrode est partiellement rechargeable si l'électrode n'est pas fortement déchargée.

De préférence encore, l'électrolyte selon l'invention est sous la forme d'une pellicule imprégnant un séparateur non tissé classique, en fibre de verre, de polymère cellulosique, vinylique, de polyoléfine, de polyamide par exemple.

En général, les générateurs de structure plane notamment parallélépipédique sont encapsulés dans une enveloppe de polymère simplement destinée à les mettre à l'abri de l'atmosphère, deux issues de courant, l'une positive, l'autre négative, permettant les charges et les décharges de ces générateurs.

Les exemples ci-après illustrent l'invention et ne sont donnés qu'à titre indicatif.

### Exemple 1

On réalise un accumulateur nickel-zinc selon le procédé suivant :

L'électrode positive est constituée d'un fritté de nickel chargé d'hydroxyde de nickel selon le procédé connu en soi, l'électrode négative est un métal déployé de zinc, maille Inl-12, ou de préférence un déployé de cuivre cadmié revêtu de zinc électrodéposé, ou imprégné d'oxyde de zinc.

L'électrolyte est constitué de 63 g de polyoxyde d'éthylène ou POE, 27 g de pastilles de KOH contenant 14 % d'eau, et 10 g d'eau au total (y compris celle des pastilles de KOH).

Le POE est porté à la fusion à 100° C, les pastilles de KOH sont alors dissoutes par agitation, puis on introduit le complément d'eau, sous agitation, en évitant l'évaporation.

Le mélange fluide est alors répandu sur chacune des électrodes, négative et positive, en couche mince, puis avant que l'électrolyte ne se fige, les deux électrodes sont assemblées face à face en interposant un séparateur de polymère non tissé, pressées pour éliminer l'excès d'électrolyte et assurer le bon contact.

Il est associé à une électrode négative de zinc métal, une électrode positive préalablement formée dans une solution aqueuse de KOH. Par contre une électrode positive déchargée est associée à une électrode négative d'oxyde de zinc.

### Exemple 2

On réalise un accumulateur nickel-zinc selon le procédé suivant :

L'électrode positive est formée par mélange intime à 100°C de 60 g d'hydroxyde de nickel et 40 g d'électrolyte formé d'un mélange de 25g d'homopolymère de polyoxyde d'éthylène ayant une masse moléculaire moyenne comprise entre 10 000 et 50 000 et de 15 g de potasse contenant 5 g d'eau.

Le mélange est ensuite rapidement mise en forme de feuille toujours à 100°C tout en insérant un collecteur servant d'issue de courant, à l'aide par exemple de racleur d'extrusion ou tout autre moyen connu en soi.

L'électrode négative est formée selon une méthode similaire à l'électrode positive par mélange intime à 100°C de 70 g de poudre de zinc métal ou oxyde de zinc et 30 g du même complexe POE/KOH, puis mise en forme avec insertion d'un collecteur.

Les deux électrodes sont assemblées et jointes par une pellicule du même électrolyte KOH/POE, imprégnant un séparateur non tissé classique.

Ce générateur de structure plane parallélépipédique est encapsulé dans une enveloppe de polymère simplement destinée à le mettre à l'abri de l'atmosphère, deux issues de courant, l'une positive, l'autre négative permettant les charges et les décharges de ce générateur de forme parallépipédique.

### Exemple 3

On réalise un accumulateur selon l'exemple 2 avec toutefois la variante suivante : on ajoute au mélange pour former l'électrode négative 10 g de poudre de cadmium afin d'améliorer la conductibilité de cette électrode négative.

### Exemple 4

On réalise un accumulateur selon l'exemple 3 avec toutefois la variante suivante : on ajoute au mélange pour former l'électrode négative 5 g de poudre fine de cuivre afin d'améliorer la conductibilité de cette électrode négative.

### Exemple 5

On réalise un accumulateur selon l'exemple 2 avec toutefois la variante suivante : on ajoute au mélange pour former l'électrode positive 15 g de poudre de nickel divisé afin d'améliorer la conductibilité de l'électrode positive.

### Exemple 6

On réalise un accumulateur nickel-zinc par empilement des feuilles obtenues selon l'exemple 2 sous forme d'une bande qui ultérieurement est enroulée sur elle-même pour former le cylindre à insérer dans le godet métallique selon la technique bien connue des accumulateurs Ni/Cd, le godet métallique et le bouchon serti sur joint plastique servant respectivement d'issue de courant pour les électrodes positive et négative.

### Exemple 7

On réalise un accumulateur à "bi-électrode" en recouvrant un feuillard métallique très mince de 1 à 5/100 de mm, en cadmium ou cuivre cadmié ou amalgamé, pour la face destinée à être recouverte par une couche négative, et en nickel ou inox pour la face destinée à être recouverte de la couche positive respectivement d'une couche formant l'électrode négative telle que décrite à l'exemple 2 d'épaisseur 95 micromètres et d'une couche formant l'électrode positive telle que décrite à l'exemple 2 d'épaisseur 97 micromètres.

De par le caractère visco-élastique du liant, il n'y a pas de liaisons électriques parasites qui s'établissent entre ces deux faces. De ce fait, il est aisé d'établir une mise en série ou parallèle efficace du point de vue des densités d'énergie ou de puissance.

### Exemple 8

On réalise une électrode de puissance, constituée d'une feuille métallique zinc ou aluminium pour l'électrode négative. Cette électrode est recouverte de dépôt métallique divisé dit actif, tel que zinc ou cadmium. Cette électrode remplace l'électrode négative des dispositifs décrits aux exemples 2 à 4.

### Exemples 9 à 11

D'autres accumulateurs sont réalisés en utilisant l'électrolyte décrit à l'exemple 2.
- L'électrode positive est réalisée par mélange de 50g de l'électrolyte avec 50 g d'oxyde d'argent ou de cuivre ou de manganèse. L'électrode négative est constituée de feuilles ou frittés de zinc ou de cadmium ou de manganèse.
- d'autres accumulateurs qui fonctionnent en milieu aqueux comme l'accumulateur nickel-hydrure métallique et nickel-hydrogène gazeux sont réalisés avec l'électrolyte décrit à l'exemple 2.
- Un accumulateur est réalisé utilisant une cathode au sulfure de fer ou au polysulfure alcalin lié par l'électrolyte sus-mentionné, associé par l'intermédiaire de ce même électrolyte, à l'ensemble électrode de zinc liée par le même électrolyte revêtu d'un film séparateur dudit mélange.

L'exemple suivant décrit une pile à combustible O₂ (air) -H₂ ou O₂ (air) -NH₃ réalisée en utilisant pour séparer des électrodes, un électrolyte alcalin obtenu selon l'exemple 2.

### Exemple 12

Un pile à combustible est réalisé en utilisant comme électrolyte un mélange de 70 g de polyoxyde d'éthylène et 30 g d'hydroxyde de N-tetrabutylammonium sous la forme d'une solution à 40 % en poids d'hydroxyde de N-tetrabutylammonium.

## Revendications

1. Electrolyte solide polymère alcalin aqueux, comprenant une matrice de polymère organique polaire, solide à température ambiante, et un composé ou un mélange de composés basiques choisis parmi les hydroxydes de métal alcalin ou alcalino-terreux ou d'ammonium, la teneur en eau étant comprise entre 0,1 et 50 *%.*

2. Electrolyte selon la revendication 1, caractérisé en ce que sa conductivité ionique est comprise entre 0,01 et 1 S/m à 25°C, de préférence 0,01 à 0,3 S/m.

3. Electrolyte selon la revendication 1, caractérisé en ce que la matrice est un homopolymère de polyéther ou un copolymère de différents éthers ou polyéthers.

4. Electrolyte selon la revendication 3, caractérisé en ce que la matrice est un polyoxyde d'éthylène de masse moléculaire comprise entre 2000 et 5 000 000, de préférence comprise entre 20 000 et 200 000.

5. Electrolyte selon l'une des revendications précédentes, caractérisé en ce que le composé ou mélange de composés est sous la forme d'une solution solidifiée.

6. Electrolyte selon la revendication 4, caractérisé en ce que les hydroxydes d'un métal alcalin sont choisis parmi la soude (NaOH), la potasse (KOH), l'hydroxyde de lithium (LiOH) et les hydroxydes de métal alcalino-terreux sont choisis notamment parmi le dihydroxyde de baryum (Ba(OH)₂) ou le dihydroxyde de calcium (Ca(OH)₂).

7. Electrolyte selon l'une des revendications précédentes, comportant en pourcentage en poids :
- polymère 30 à 90 *%,* de préférence 50 à 80 %,
- composé basique 5 à 50 *%,* de préférence 10 à 30 *%*
- eau 5 à 25 %.

8. Electrolyte selon l'une des revendications 1 à 7, caractérisé en ce qu'il est susceptible d'être obtenu par dissolution de l'hydroxyde basique dans le polymère fondu à une température appropriée, notamment 60 à 150°C.

9. Electrolyte selon la revendication 8, caractérisé en ce que lorsque le polymère est le polyoxyde d'éthylène la température du mélange est comprise entre 70° et 110°C.

10. Procédé de préparation d'un électrolyte polymère solide alcalin selon l'une des revendications 1 à 9, caractérisé en ce qu'on mélange un ou plusieurs polymères polaires à une température où ils se trouvent à l'état fondu avec un ou plusieurs composés basiques en présence d'eau et en ce que l'on refroidit le mélange et l'on récupère ledit électrolyte.

11. Electrode comportant une ou plusieurs matières actives liées par un électrolyte selon l'une des revendications 1 à 9.

12. Electrode selon la revendication 11, caractérisée en ce qu'elle comporte en pourcentage en poids :
- matière active 40 à 75 %
- électrolyte 60 à 25 %.

13. Générateur électrochimique pourvu d'une électrode négative et d'une électrode positive, notamment selon celles des revendications 11 et 12, reliées par un électrolyte selon l'une des revendications 1 à 9, occupant l'espace inter-électrodes.

14. Générateur selon la revendication 13, caractérisé en ce que l'électrode négative est du type choisi parmi le zinc, cadmium, fer, aluminium, magnésium ou hydrures ou oxyde métalliques ou électrode à gaz comme l'électrode à hydrogène ; l'électrode positive est du type choisi parmi l'hydroxyde ou oxyde de cuivre, argent, mercure, manganèse, vanadium, chrome, molybdène, nickel ; sulfures de fer, titane, molybdène, ou à gaz type air, oxygène.

15. Générateur selon la revendication 14, à électrode négative de zinc.

16. Générateur selon la revendication 15, du type nickel-zinc. caractérisé en ce que l'électrode positive est constituée d'hydroxyde de nickel noyé dans un électrolyte selon l'une des revendications 1 à 9, mise en forme de feuille, éventuellement connectée à un collecteur servant d'issue de courant, l'électrode négative est constituée de poudre de zinc-métal ou oxyde noyée dans l'électrolyte selon l'une des revendications 1 à 9, les deux électrodes étant reliées par un électrolyte selon l'une des revendications 1 à 9.

17. Générateur électrochimique selon la revendication 13, caractérisé en ce qu'il est constitué de couches de matières actives constituant l'électrode négative et l'électrode positive, liées par l'électrolyte selon l'une des revendications I à 9, de manière à constituer un film mince adhérent et en liaison électronique avec un support conducteur tel qu'un feuillard métallique.

18. Bi-électrode constituée d'un support conducteur associé sur chaque face à deux matières actives opposées liées par un électrolyte selon l'une des revendications 1 à 9.

19. Pile à combustible, caractérisée en ce que l'électrolyte est un électrolyte selon l'une des revendications 1 à 9.

## Patentansprüche

1. Fester polymerer alkalischer wasserhaltiger Elektrolyt, umfassend eine bei Raumtemperatur feste polare organische Polymermatrix und eine basische Verbindung oder eine Mischung basischer Verbindungen, ausgewählt aus Hydroxiden von Alkalimetallen oder Erdalkalimetallen oder von Ammonium, wobei der Wassergehalt zwischen 0,1 und 50 % liegt.

2. Elektrolyt nach Anspruch 1, dadurch charakterisiert, daß die Ionenleitfähigkeit zwischen 0,01 und 1 S/m bei 25°C liegt, bevorzugt zwischen 0,01 bis 0,03 S/m.

3. Elektrolyt nach Anspruch 1, dadurch charakterisiert, daß die Matrix ein Homopolymer aus Polyether oder ein Copolymer verschiedener Ether oder Polyether ist.

4. Elektrolyt nach Anspruch 1, dadurch charakterisiert, daß die Matrix ein Polyethylenoxid einer Molekülmasse zwischen 2000 und 500.000 ist, bevorzugt zwischen 20.000 und 200.000.

5. Elektrolyt nach einem der vorstehenden Ansprüche, dadurch charakterisiert, daß die Verbindung oder das Gemisch von Verbindungen in Form einer festen Lösung vorliegt.

6. Elektrolyt nach Anspruch 4, dadurch charakterisiert, daß die Alkalimetallhydroxide ausgewählt werden aus Soda (NaOH), Pottasche (KOH), Lithiumhydroxid (LiOH) und daß die Erdalkalimetallhydroxide insbesondere ausgewählt werden aus Bariumdihydroxid (Ba(OH)₂) oder Calciumdihydroxid (Ca(OH)₂).

7. Elektrolyt nach einem der vorstehenden Ansprüche, umfassend in Gew.-%:
- Polymer 30 bis 90 %, bevorzugt 50 bis 80 %,
- basische Verbindung 5 bis 50 %, bevorzugt 10 bis 30 %
- Wasser 5 bis 25 %.

8. Elektrolyt nach einem der Ansprüche 1 bis 7, dadurch charakterisiert, daß er erhältlich ist durch Lösen des basischen Hydroxids im bei einer geeigneten Temperatur, insbesondere bei 60 bis 150 °C, geschmolzenen Polymer.

9. Elektrolyt nach Anspruch 8, dadurch charakterisiert, daß das Polymer ein Polyethlyenoxid ist und die Temperatur der Mischung zwischen 70 und 110 °C liegt.

10. Verfahren zur Herstellung eines alkalischen festen polymeren Elektrolyten nach einem der Ansprüche 1 bis 9, dadurch charakterisiert, daß man ein oder mehrere polare Polymere bei einer Temperatur, bei der sie sich im geschmolzenen Zustand befinden, mit einer oder mehreren basischen Verbindungen in Gegenwart von Wasser mischt, daß man die Mischung abkühlt und den Elektrolyten isoliert.

11. Elektrode, umfassend einen oder mehrere aktive Stoffe, die durch einen Elektrolyten nach einem der Ansprüche 1 bis 9 gebunden sind.

12. Elektrode nach Anspruch 11, dadurch charakterisiert, daß sie in Gew.-% umfaßt:
- aktiver Stoff 40 bis 75 %
- Elektrolyt 60 bis 25 %.

13. Elektrochemischer Generator, der mit einer negativen Elektrode und einer positiven Elektrode versehen ist, insbesondere solche nach Ansprüchen 11 und 12, die durch einen Elektrolyten nach einem der Ansprüche 1 bis 9 verbunden sind, der den Elektrodenzwischenraum einnimmt.

14. Generator nach Anspruch 13, dadurch charakterisiert, daß die negative Elektrode ausgewählt wird aus Zink, Cadmium, Eisen, Aluminium, Magnesium oder Hydriden oder Metalloxiden oder Gaselektroden wie einer Wasserstoffelektrode; die positive Elektrode ausgewählt wird aus Hydroxid oder Oxid von Kupfer, Silber, Quecksilber, Mangan, Vanadium, Chrom, Molybdän, Nickel, Sulfiden von Eisen, Titan, Molybdän oder einem Gas wie Luft oder Sauerstoff.

15. Generator nach Anspruch 14 mit einer negativen Zinkelektrode.

16. Generator nach Anspruch 15 vom Nickel-Zink-Typ, dadurch charakterisiert, daß die positive Elektrode gebildet wird von Nickelhydroxid in einem Elektrolyten nach einem der Ansprüche 1 bis 9 und in Form einer Folie vorliegt, und gegebenenfalls verbunden ist mit einem als Stromquelle dienenden Kollektor, daß die negative Elektrode gebildet wird aus Zinkmetallpulver oder Oxid in einem Elektrolyten nach einem der Ansprüche 1 bis 9, wobei die beiden Elektroden mit einem Elektrolyten nach einem der Ansprüche 1 bis 9 verbunden sind.

17. Elektrochemischer Generator nach Anspruch 13, dadurch charakterisiert, daß er gebildet wird aus Schichten aktiver Stoffe, die die negative Elektrode und die positive Elektrode darstellen und verbunden sind durch einen Elektrolyten nach den Ansprüchen 1 bis 9 in der Weise, daß ein dünner haftender Film gebildet wird, der in elektronischer Verbindung mit einem leitenden Träger wie einer Metallfolie steht.

18. Bi-Elektrode, aufgebaut aus einem leitenden Träger, der auf jeder Seite mit zwei entgegengesetzten aktiven Stoffen verbunden ist, die mit einem Elektrolyten nach einem der Ansprüche 1 bis 9 verbunden sind.

19. Brennstoffzelle, dadurch charakterisiert, daß der Elektrolyt ein Elektrolyt nach einem der Ansprüche 1 bis 9 ist.

## Claims

1. Aqueous alkaline polymer solid electrolyte comprising a polar organic polymer matrix which is solid at ambient temperature, and a basic compound or a mixture of basic compounds chosen from alkali metal hydroxides or alkaline earth metal hydroxides or ammonium hydroxides, the content of water being between 0.1 and 50%.

2. Electrolyte according to Claim 1, characterized in that its ionic conductivity is between 0.01 and 1 S/m at 25°C, preferably from 0.01 to 0.3 S/m.

3. Electrolyte according to Claim 1, characterized in that the matrix is a polyether homopolymer or a copolymer of different ethers or polyethers.

4. Electrolyte according to Claim 3, characterized in that the matrix is a polyethylene oxide with a molecular mass of between 2000 and 5 000 000, preferably between 20 000 and 200 000.

5. Electrolyte according to one of the preceding claims, characterized in that the compound or mixture of compounds is in the form of a solidified solution.

6. Electrolyte according to Claim 4, characterized in that the alkali metal hydroxides are chosen from sodium hydroxide (NaOH), potassium hydroxide (KOH), lithium hydroxide (LiOH) and the alkaline earth metal hydroxides are chosen, in particular, from barium dihydroxide (Ba(OH)₂) or calcium dihydroxide (Ca(OH)₂).

7. Electrolyte according to one of the preceding claims, comprising in per cent by weight:
- polymer: 30 to 90%, preferably 50 to 80%,
- basic compound: 5 to 50%, preferably 10 to 30%
- water: 5 to 25%.

8. Electrolyte according to one of Claims 1 to 7, characterized in that it can be obtained by dissolving the basic hydroxide in the molten polymer at an appropriate temperature, in particular from 60 to 150°C.

9. Electrolyte according to Claim 8, characterized in that when the polymer is polyethylene oxide the temperature of the mixture is between 70° and 110°C.

10. Process for the preparation of an alkaline solid polymer electrolyte according to one of Claims 1 to 9, characterized in that one or more polar polymers are mixed at a temperature in which they is in the molten state with one or more basic compounds, in the presence of water, and in that the mixture is cooled and the said electrolyte is recovered.

11. Electrode comprising one or more active materials connected by an electrolyte according to one of Claims 1 to 9.

12. Electrode according to Claim 11, characterized in that it comprises, in per cent by weight:
- active material: from 40 to 75%
- electrolyte: from 60 to 25%.

13. Electrochemical generator provided with a negative electrode and with a positive electrode, especially in accordance with those of Claims 11 and 12, which are connected by an electrolyte according to one of Claims 1 to 9 which occupies the inter-electrode space.

14. Generator according to Claim 13, characterized in that the negative electrode is of the type chosen from zinc, cadmium, iron, aluminium, magnesium or metal oxide or hydrides, or a gas electrode such as the hydrogen electrode; the positive electrode is of the type chosen from the nickel, molybdenum, chromium, vanadium, manganese, mercury, silver or copper oxide or hydroxide; sulphides of iron, titanium or molybdenum, or a gas electrode of the air or oxygen type.

15. Generator according to Claim 14 with a zinc negative electrode.

16. Generator according to Claim 15, of the nickel-zinc type, characterized in that the positive electrode consists of nickel hydroxide immersed in an electrolyte according to one of Claims 1 to 9, which positive electrode is shaped into a foil and is optionally connected to a collector which serves to lead off the current, the negative electrode consists of zinc metal powder or zinc oxide and immersed in the electrolyte according to one of Claims 1 to 9, the two electrodes being connected by an electrolyte according to one of Claims 1 to 9.

17. Electrochemical generator according to Claim 13, characterized in that it consists of layers of active materials constituting the negative electrode and the positive electrode, which are connected by the electrolyte according to one of Claims 1 to 9 so as to constitute a thin adherent film, and in electronic connection with a conductive support such as a metal strip.

18. Bi-electrode consisting of a conductive support in combination on each face with two opposed active materials connected by an electrolyte according to one of Claims 1 to 9.

19. Fuel cell, characterized in that the electrolyte is an electrolyte according to one of Claims 1 to 9.
